# EUROPÄISCHE PATENTANMELDUNG

(11) **EP 0 707 282 A2**
(43) Veröffentlichungstag der Anmeldung: **17.04.1996**
(21) Anmeldenummer: 95115750.2
(22) Anmeldetag: 06.10.1995
(51) Int. Cl.: G06K 19/18, B42D 15/10

(54) **ID-Karte**

(30) Priorität: 11.10.1994 DE 4436302
(71) Anmelder: SICHT-PACK HAGNER GmbH, D-72280 Dornstetten-Hallwangen (DE)
(72) Erfinder: Hagner, Hans, D-72280 Dornstetten (DE)
(74) Vertreter: Frank, Gerhard, Dipl.-Phys.

(57) **Zusammenfassung**

ID-Karten werden heute aus PVC aufgebaut. Es wird vorgeschlagen, eine ID-Karte mit folgenden Schichten auszubilden: Mindestens eine Kernschicht ist vorgesehen, die mindestens eine erste Kern-Teilschicht aus einer ersten Zusammensetzung, umfassend ein PP-Block-Copolymerisat und/oder Homo-PP oder eine Mischung hiervon enthält; mindestens auf der Außenseite, auf welcher eine Außenschicht auflaminiert ist, wird eine zweite Kern-Teilschicht vorgesehen, die eine zweite Zusammensetzung, umfassend Random-PP bzw. Random-Copolymerisat enthält; mindestens eine Außenschicht ist vorgesehen, welche mindestens eine erste Außen-Teilschicht umfaßt, die eine dritte Zusammensetzung, umfassend Homo-PP enthält; mindestens auf der Außenseite, mit welche die Außenschicht auf die Kernschicht auflaminiert ist, wird eine zweite Außen-Teilschicht vorgesehen, die eine vierte Zusammensetzung, umfassend Random-PP bzw. Random-Copolymerisat enthält. Die ersten und zweiten Kern- und Außen-Teilschichten sind durch Koextrusion miteinander fest verbunden.

## Beschreibung

Die Erfindung betrifft eine ID-Karte mit mindestens einem maschinenlesbaren Datenträger, insbesondere einem Magnetstreifen und/oder einem eingebauten Mikrochip, sowie mit einem Druckbild, umfassend eine Kernschicht und mindestens eine Außenschicht zum Abdecken mindestens einer der Außenseiten.

Derartige ID-Karten werden inzwischen derart häufig verwendet, daß sowohl ihr Herstellungspreis als auch ihre Entsorgung eine gesamtwirtschaftlich nicht unbedeutende Rolle spielt. Aufgrund seines niedrigen Preises und günstiger Materialeigenschaften beim Verarbeiten hat sich PVC als Werkstoff durchgesetzt. Bei der Entsorgung dieses Kunststoffes kommt es jedoch zu nicht unbeträchtlichen Umweltbelastungen.

Der Erfindung liegt die Aufgabe zugrunde, eine ID-Karte der eingangs genannten Art dahingehend aufzuzeigen, daß bei einfacher Herstellung und Weiterverarbeitung die für ID-Karten notwendigen Stabilitätskriterien erfüllt und Umweltbelastungen bei der Entsorgung verringert werden.

Diese Aufgabe wird durch eine ID-Karte nach dem Patentanspruch 1 oder eine ID-Karte nach dem Patentanspruch 2 gelöst.

Gemäß der ersten Lösung der eingangs genannten Aufgabe weist die Kernschicht mindestens eine erste Kern-Teilschicht auf, die eine erste Zusammensetzung, umfassend ein Polypropylen (PP) Block-Copolymerisat und/oder Homo-PP oder eine Mischung hiervon enthält. Mindestens auf der Außenseite, auf welcher eine Außenschicht auflaminiert ist, wird eine zweite Kern-Teilschicht aufgebracht, die eine zweite Zusammensetzung umfassend Random-PP bzw. Random-Copolymerisat enthält. Mindestens eine Außenschicht ist vorgesehen, die mindestens eine erste Außen-Teilschicht umfaßt, welche eine dritte Zusammensetzung umfassend Homo-PP enthält. Mindestens auf der Außenseite, mit welcher die Außenschicht auf die Kernschicht auflaminiert, ist eine zweite Außen-Teilschicht vorgesehen, die eine vierte Zusammensetzung, umfassend Random-PP bzw. Random-Copolymerisat enthält. Die ersten und die zweiten Kern- und Außen-Teilschichten sind durch Koextrusion miteinander fest verbunden.

Durch den genannten Schichtaufbau ist es möglich, die notwendige Festigkeit der ID-Karte zu erzielen.

Bei der zweiten Lösung weist die Kernschicht mindestens zwei erste Kern-Teilschichten auf, die eine erste Zusammensetzung, umfassend ein PP-Block-Polymerisat und/oder ein Homo-PP oder eine Mischung hiervon enthält. Mindestens auf den einander zugewandten Seiten der ersten Kern-Teilschichten ist jeweils eine zweite Kern-Teilschicht vorgesehen, die eine zweite Zusammensetzung, umfassend Random-PP bzw. Random-Copolymerisat enthält. Die Außenschicht wird vorzugsweise als Lack ausgebildet. Die ersten und die zweiten Kern-Teilschichten werden durch Koextrusion miteinander verbunden. Auch bei dieser besonders einfachen Ausführungsform der ID-Karte sind die notwendigen Stabilitätseigenschaften der Karte sichergestellt.

Auch bei der ersten Ausführungsform der Erfindung besteht die Kernschicht vorzugsweise aus mindestens zwei ersten Kern-Teilschichten, die vorzugsweise beidseitig koextrudierte zweite Kern-Teilschichten aufweisen. Durch diese koextrudierten zweiten Kern-Teilschichten können die ersten Kern-Teilschichten in einfacher Weise und dennoch äußerst stabil miteinander verbunden werden.

Das Druckbild wird bei der ersten Ausführungsform der Erfindung entweder auf der zweiten Kern-Teilschicht oder auf der, der zweiten Kern-Teilschicht zugewandten zweiten Außen-Teilschicht angebracht.

Die Außenschicht wird bei einer Ausführungsform der Erfindung aus biaxial verstrecktem PP gefertigt, was der Gesamtkarte eine erhöhte Steifigkeit verleiht.

Vorzugsweise enthält die erste Zusammensetzung 15-25 gew%, vorzugsweise 20 gew% Füllmaterial, insbesondere Talkum; 4-6 gew% vorzugsweise 5 gew% Farbstoff; 0-5 gew% insbesondere 5 gew% Homo-PP, insbesondere vom Typ 1100 L; 64-81 gew%, insbesondere 77 gew% Block-Copolymerisat, insbesondere vom Typ 2309 KX. Die Typenbezeichnungen sind Handelsbezeichnungen der Firma BASF.

Die zweite Zusammensetzung enthält vorzugsweise 95-99 gew%, vorzugsweise 97 gew% Block-Copolymerisat, insbesondere vom Typ 3520 LX und 1-5 gew%, vorzugsweise 3 gew% Nukleierungsmittel insbesondere vom Typ NU 10.

Die dritte Zusammensetzung enthält vorzugsweise 96-99 gew%, insbesondere 97 gew% Homo-PP, insbesondere vom Typ 1302 L sowie 1-4 gew%, insbesondere 3 gew% Nukleierungsmittel, insbesondere vom Typ NU 10.

Die vierte Zusammensetzung entspricht vorzugsweise der zweiten Zusammensetzung.

Mit dieser Kombination von verschiedenen Polymerisaten, Füllstoffen usw. wird überraschenderweise eine Kombination aus Steifigkeit und Elastizität der Karte erreicht, die unerwartet ist. Die so herstellbaren Karten weisen Eigenschaften, ähnlich PVC-Karten auf, also Materialeigenschaften, die bisher im Zusammenhang mit Polypropylen nicht erwartet wurden.

Wenn in die Karten IC's eingeklebt werden sollen, um sogenannte Chipkarten herzustellen, so ist es von Vorteil, wenn mindestens eine Bondschicht in der Karte enthalten ist, die mindestens einer der ersten Kern-Teilschichten und/oder zwischen zwei zweiten Teilschichten oder auch in einer Außen-Teilschicht derart ausgebildet ist, daß ein Mikrochip auf die Bondschicht aufklebbar ist. Die übliche Ausfräsung zur Aufnahme des Mikrochips wird also so durchgeführt, daß die Bondschicht nicht vollständig mit fortgenommen wird, sondern einen Untergrund zum Aufkleben eines Mikrochips bildet. Vorzugsweise wird die Bondschicht hierbei mit mindestens einer der angrenzenden Schichten koextrudiert, so daß eine Ablösung der Bondschicht von ihrem Untergrund sicher vermieden wird.

Nachfolgend werden Ausführungsbeispiele der Erfindung anhand von Zeichnungen näher erläutert. Hierbei zeigen
- Fig. 1: eine erste Ausführungsform der erfindungsgemäßen ID-Karte in einer Teil-Seitenansicht,
- Fig. 2: eine zweite Ausführungsform der Erfindung,
- Fig. 3: einen Teilschnitt durch die Karte nach Fig. 2,
- Fig. 4 bis 10: jeweils eine dritte bis neunte Ausführungsform der Erfindung in einer Darstellung entsprechend der nach Fig. 1.

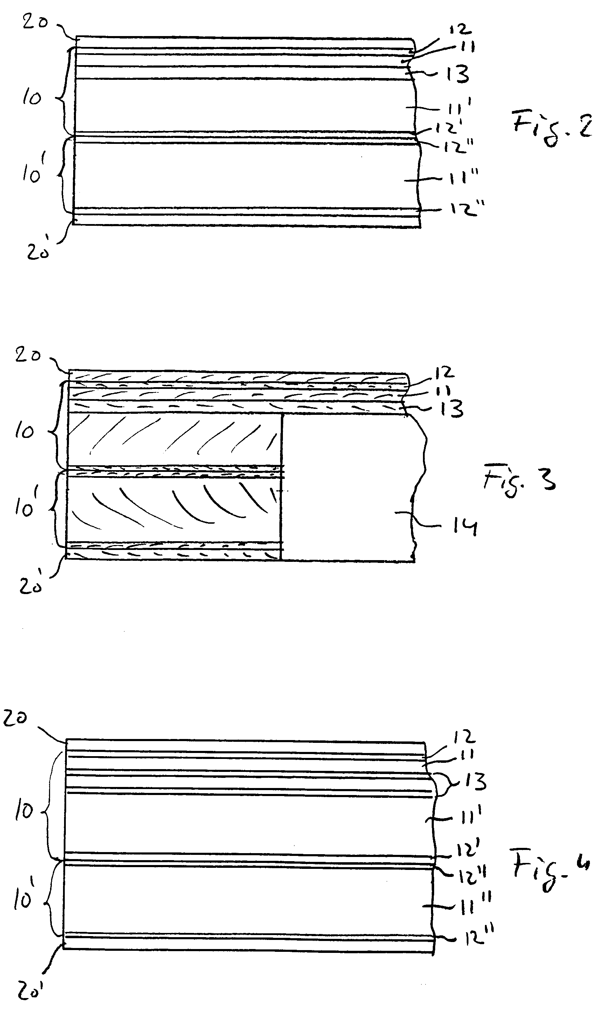

Bei der in Fig. 2 in Seitenansicht gezeigten Ausführungsform der Erfindung sind zwei Kernschichten 10, 10' und zwei diese abdeckende Außenschichten 20, 20' vorgesehen. Jede der Kernschichten 10, 10' weist eine erste Kern-Teilschicht 11 auf, die auf beiden ihrer Außenflächen durch zweite Kern-Teilschichten 12 abgedeckt ist. Die zweiten Kern-Teilschichten sind mit der ersten Kern-Teilschicht durch Koextrusion miteinander verbunden. Der gleiche Schichtaufbau gilt für die zweite Kernschicht 10'.

Die Außenschichten 20, 20' umfassen eine erste Außen-Teilschicht 21, auf deren Außenflächen zweite Außen-Teilschichten 22 aufgebracht sind. Auch hier sind wieder die zweiten Außen-Teilschichten 22 mit der ersten Außen-Teilschicht 21 durch CO-Extrusion verbunden. Dasselbe gilt für die zweite Außenschicht 20'.

Aus obigem ist bereits ersichtlich, daß die Kernschichten 10, 10' sowie die Außenschichten 20, 20' jeweils separat aus jeweils drei Schichten (ko)extrudiert werden. Die so entstehenden Flächen werden aufeinanderlaminiert, also unter Wärme und Druck miteinander fest verbunden.

Die Außenschichten 20, 20' sind glasklar. Die zweiten Außen-Teilschichten 22 bestehen vorzugsweise aus etwa 97 gew% Polypropylen vom Typ 3520 LX (BASF) und etwa 3 gew% NU 10 (BASF) und weisen eine Schichtdicke von etwa 5 µm auf. Die ersten Außen-Teilschichten 21 bestehen vorzugsweise aus Polypropylen vom Typ 1302 L und zwar zu 97 gew% und etwa 3 gew% NU 10. Die Schichtdicke beträgt etwa 140 µm.

Die Kernschichten 10 umfassen die ersten Kern-Teilschichten 11, welche jeweils aus etwa 97 gew% Polypropylen vom Typ 3520 LX und zu etwa 3 gew% aus NU 10 bestehen. Die Zusammensetzung entspricht also derjenigen der zweiten Außen-Teilschicht. Die Schichtdicke beträgt etwa 15 µm.

Die erste Kern-Teilschicht 11 ist etwa 245 µm dick und besteht aus etwa 70 gew% Polypropylen vom Typ 2309 KX, etwa 5 gew% Polypropylen vom Typ 1100 L, etwa 5 gew% Farbstoff (weiß) vom Typ P 8555 (Schulmann) und etwa 20 gew% Talkum vom Typ PPTV (Westensee).

Die zweite Kernschicht 10' und die zweite Außenschicht 20' entsprechen in ihrem Aufbau und ihrer Zusammensetzung exakt der ersten Kernschicht 10 bzw. der ersten Außenschicht 20.

Die Gesamtstärke ergibt sich zu etwa 850 µm, eine Stärke, wie sie für ID-Karten durch Normung vorgegeben ist.

Bei der nachfolgenden Beschreibung weiterer Ausführungsformen der Erfindung werden für dieselben Teilschichten dieselben Bezugsziffern gewählt, wobei dieselben Bezugsziffern der Teilschichten auch immer dieselben, oben bereits im einzelnen spezifizierten Zusammensetzungen bedeuten.

Bei der in den Fig. 2 und 3 gezeigten Ausführungsform der Erfindung besteht die Außenschicht 20 aus einer Lage biaxial verstrecktem bzw. orientiertem PP (Mobil-Plasik MB 400) mit einer Schichtdicke von etwa 40 µm.

Die erste Kernschicht 10 umfaßt eine erste Kern-Teilschicht 11 mit einer Schichtdicke von etwa 45 µm, auf deren, der Außenschicht 20 zugewandten Fläche eine zweite Kern-Teilschicht 12 und auf deren anderen Fläche eine Bondschicht 13 vorgesehen sind. Die Schichten 11-13 sind koextrudiert. Die Bondschicht 13 besteht aus Fusabond (Du Pont), also aus einem Material, das für sich alleine gesehen bereits gute Klebeigenschaften aufweist.

Bei der in Fig. 2/3 gezeigten Ausführungsform ist nun eine weitere erste Kern-Teilschicht 11' angrenzend an die Bondschicht 13 und auf der ersten Kern-Teilschicht 11' eine weitere zweite Kern-Teilschicht 12' vorgesehen. Bei dieser Ausführungsform der Erfindung besteht also die erste Kernschicht aus insgesamt fünf Teilschichten. Die zweite Kernschicht 10' ist wie vorher beschrieben aufgebaut.

Wie in Fig. 3 angedeutet fräst man zum Einsetzen eines IC einen Teil des Kartenmaterials so heraus, daß die Bondschicht 13 im wesentlichen freiliegt. In die sich so ergebende Ausnehmung 14 kann nun ein Chip eingeklebt werden. Die Schichtdicken sind bei dieser Ausführungsform (in Fig. 2 von oben nach unten) wie folgt: Außenschicht 20, 40 µm; zweite Kern-Teilschicht 12, 15 µm; erste Kern-Teilschicht 11, 45 µm; Bondschicht 13, 50 µm; erste Kern-Teilschicht 11', 260 µm; zweite Kern-Teilschicht 12', 15 µm; zweite Kern-Teilschicht 12'', 15 µm; erste Kern-Teilschicht 11'', 355 µm; zweite Kern-Teilschicht 12'', 15 µm und (zweite) Außenschicht 20', 40 µm.

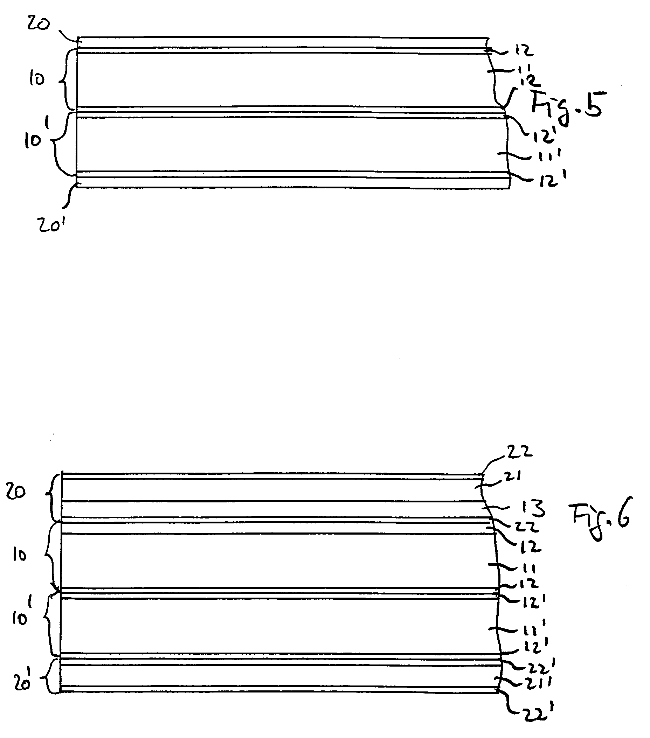

Die in Fig. 4 gezeigte Ausführungsform der Erfindung unterscheidet sich von der nach Fig. 2/3 dadurch, daß die Bondschicht 13 aus einer Schicht Surlyn (Du Pont) besteht (Schichtdicke 40 µm), auf deren beiden Flächen ein Haftvermittler (5 µm) vorgesehen ist. Ansonsten entspricht der Aufbau dem der anhand von Fig. 2 erläuterten Ausführungsform, was auch für die Schichtdicken gilt.

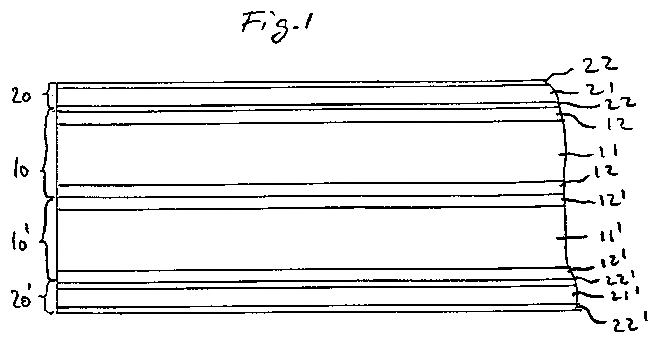

Die in Fig. 5 gezeigte Ausführungsform unterscheidet sich von der nach Fig. 1 dadurch, daß anstelle des dreischichtigen Aufbaus der Außenschicht 20 eine biaxial verstreckte Polypropylenfolie (Mobil-Plastik MB 400) verwendet ist.

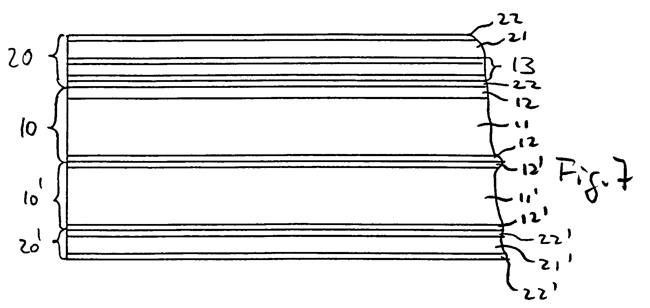

Die in Fig. 6 gezeigte Ausführungsform der Erfindung weist wieder eine Bondschicht 13 entsprechend der anhand von Fig. 2/3 erläuterten Ausführungsform (Fusabond) auf. Diese Bondschicht 13 ist bei der in Fig. 6 gezeigten Ausführungsform zwischen der ersten Außen-Teilschicht 21 und der zweiten (inneren) Außen-Teilschicht 22 der Außenschicht 20 vorgesehen. Ansonsten entspricht der Aufbau dieser Ausführungsform der Ausführungsform nach Fig. 1.

Die in Fig. 7 gezeigte Ausführungsform der Erfindung unterscheidet sich von der nach Fig. 6 dadurch, daß die Bondschicht 13 sowie beim Ausführungsbeispiel gemäß Fig. 4 dreischichtig aufgebaut ist, also eine Schicht Surlyn mit beidseitigem Haftvermittler umfaßt.

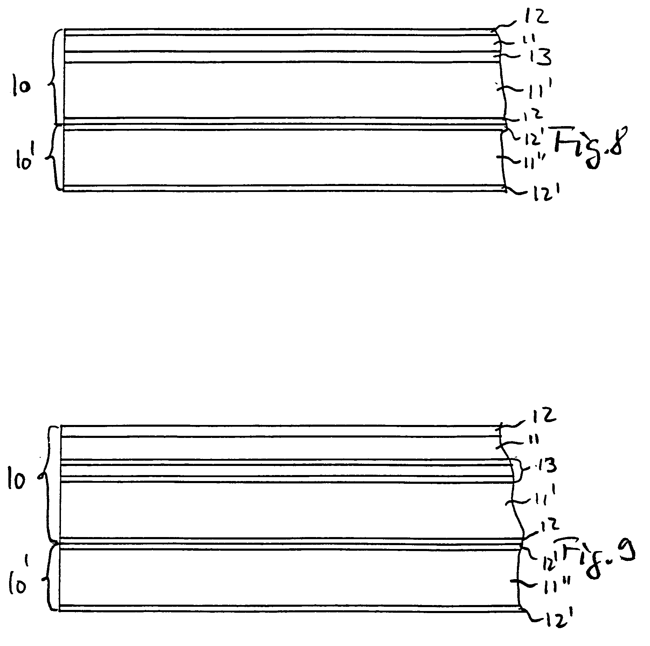

Bei der Ausführungsform der Erfindung nach Fig. 8 ist die Außenschicht (falls eine solche überhaupt notwendig ist) als Lack ausgebildet. Diese Ausführungsform besteht also lediglich aus zwei Kernschichten 10, 10', wobei die (in Fig. 8) obere Kernschicht 10 zwei Kern-Teilschichten 11, 11' umfaßt, die über eine Bondschicht 13 (Fusabond) miteinander verbunden sind.

Die Ausführungsform nach Fig. 9 unterscheidet sich von der nach Fig. 8 dadurch, daß die Bondschicht 13 wie beim Ausführungsbeispiel gemäß Fig. 4 oder Fig. 7 aus Surlyn mit beidseitigem Haftvermittler besteht.

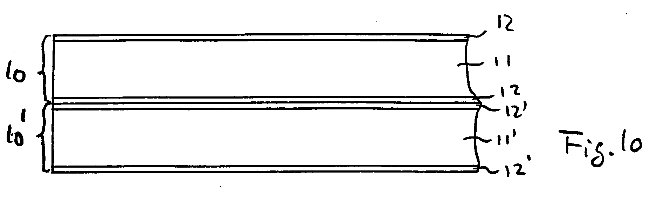

Die in Fig. 10 gezeigte einfachste Ausführungsform der Erfindung umfaßt wieder als Klarlack ausgebildete Außenschichten und Kernschichten 10, 10', die wie bei der Ausführungsform nach Fig. 1 aufgebaut sind.

Aus obigen Erläuterungen geht hervor, daß eine ganze Reihe von Varianten möglich ist. Wesentlich ist jedoch, daß die einzelnen PP-Schichten 11, 21 aus Polypropylen mit einem hohen Schmelzpunkt über PP-Schichten 12, 22 oder eine Bondschicht 13 mit einem niedrigeren Schmelzpunkt verbunden sind. Durch die beschriebenen Zusammensetzungen ist dies gewährleistet, was dazu führt, daß sehr stabile Karten relativ einfach herstellbar sind. Der mehrschichtige Aufbau der Kernschicht ist insbesondere insofern vorteilhaft, als ein Bedrucken dünnerer Schichten und nachfolgendes Laminieren besonders einfach ist.

## Patentansprüche

1. ID-Karte mit mindestens einem maschinenlesbaren Datenträger, insbesondere einem Magnetstreifen und/oder eingebauten Mikrochip, sowie mit mindestens einem Druckbild, umfassend eine Kernschicht und mindestens eine Außenschicht zum Abdecken mindestens einer der Außenseiten,
**dadurch gekennzeichnet,** daß
die Kernschicht (10, 10', 10'') aufweist:
mindestens eine erste Kern-Teilschicht (11), die eine erste Zusammensetzung, umfassend ein PP-Block-Copolymerisat und/oder Homo-PP oder eine Mischung hiervon enthält,
mindestens auf der Außenseite, auf welcher eine Außenschicht (20, 20') auflaminiert ist, eine zweite Kern-Teilschicht (12), die eine zweite Zusammensetzung, umfassend Random-PP bzw. Random-Copolymerisat enthält,
die mindestens eine Außenschicht (20, 20') aufweist:
mindestens eine erste Außen-Teilschicht (21), die eine dritte Zusammensetzung, umfassend Homo-PP enthält,
mindestens auf der Außenseite, auf welcher die Außenschicht (20, 20') auf die Kernschicht (10, 10', 10'') auflaminiert ist, eine zweite Außen-Teilschicht (22), die eine vierte Zusammensetzung, umfassen Random-PP bzw. Random-Copolymerisat enthält, und daß
die ersten und zweiten Kern- und Außen-Teilschichten (11, 12; 21, 22) durch Koextrusion miteinander fest verbunden sind.

2. ID-Karte mit mindestens einem maschinenlesbaren Datenträger, insbesondere einem Magnetstreifen und/oder eingebautem Mikrochip sowie mit mindestens einem Druckbild umfassend eine Kernschicht und mindestens eine Außenschicht zum Abdecken mindestens einer der Außenseiten,
**dadurch gekennzeichnet,** daß
die Kernschicht (10, 10', 10'') aufweist:
mindestens zwei erste Kern-Teilschichten (11, 11'), die eine erste Zusammensetzung, umfassend ein PP-Block-Polymerisat und/oder Homo-PP oder eine Mischung hiervon enthält;
mindestens aufeinander zugewandten Seiten der ersten Kern-Teilschichten (11, 11') jeweils eine zweite Kern-Teilschicht (12, 12'), die eine zweite Zusammensetzung, umfassend Random-PP bzw. Random-Copolymerisat enthält,
daß die Außenschicht (20) ein Lack ist, und
daß die ersten und zweiten Kern-Teilschichten (11, 12; 11' ,12') durch Koextrusion miteinander verbunden sind.

3. ID-Karte nach Anspruch 1,
**dadurch gekennzeichnet,** daß
die Kernschicht (10) aus mindestens zwei ersten Kern-Teilschichten (11, 11') mit vorzugsweise beidseitig koextrudierten zweiten Kern-Teilschichten (12) besteht.

4. ID-Karte nach Anspruch 1,
**dadurch gekennzeichnet,** daß
das Druckbild entweder auf der zweiten Kern-Teilschicht (12) oder auf der, der zweiten Kern-Teilschicht (12) zugewandten zweiten Außen-Teilschicht (22) angebracht ist.

5. ID-Karte nach Anspruch 1,
**dadurch gekennzeichnet,** daß
die mindestens eine Außenschicht (20, 20') biaxial verstreckt ist.

6. ID-Karte nach einem der vorhergehenden Ansprüche,
**dadurch gekennzeichnet,** daß
die erste Zusammensetzung enthält:
15-25 gew%, vorzugsweise 20 gew% Füllmaterial, insbesondere Talkum;
4-6 gew%, vorzugsweise 5 gew% Farbstoff;
0-5 gew%, vorzugsweise 5 gew% Homo-PP, insbesondere vom Typ 1100 L
64-81 gew%, vorzugsweise 70 gew% Block-Copolymerisat, insbesondere vom Typ 2309 KX.

7. ID-Karte nach einem der vorhergehenden Ansprüche,
**dadurch gekennzeichnet,** daß
die zweite Zusammensetzung enthält:
95-99 gew%, vorzugsweise 97 gew% Block-Copolymerisat, insbesondere vom Typ 3520 LX;
1-5 gew%, vorzugsweise 3 gew% Nukleierungsmittel, insbesondere vom Typ NU 10.

8. ID-Karte nach einem der vorhergehenden Ansprüche,
**dadurch gekennzeichnet,** daß
die dritte Zusammensetzung enthält:
96-99 gew%, vorzugsweise 97 gew% Homo-PP, insbesondere vom Typ 1302 L
1-4 gew%, vorzugsweise 3 gew% Nukleierungsmittel, insbesondere vom Typ NU 10.

9. ID-Karte nach Anspruch 8,
**dadurch gekennzeichnet,** daß
die vierte Zusammensetzung enthält:
95-99 gew%, vorzugsweise 97 gew% Block-Copolymerisat, insbesondere vom Typ 3520 LX;
1-5 gew%, vorzugsweise 3 gew% Nukleierungsmittel, insbesondere vom Typ NU 10.

10. ID-Karte nach einem der vorhergehenden Ansprüche,
**gekennzeichnet** durch
mindestens eine Bondschicht (13), die vorzugsweise in der mindestens einen ersten Kern-Teilschicht (11, 11') und/oder zwischen zwei zweiten Teilschichten (12, 22) vorgesehen und derart ausgebildet ist, daß ein Mikrochip auf die Bondschicht aufklebbar ist.

11. ID-Karte nach Anspruch 10,
**dadurch gekennzeichnet,** daß
die Bondschicht (13) mit mindestens einer der angrenzenden Schichten koextrudiert ist.
